# NOUVEAU FASCICULE DE BREVET EUROPEEN

(11) **EP 1 019 272 B2**
(45) Date de publication et mention de la décision concernant l'opposition: **13.08.2008**
(45) Mention de la délivrance du brevet: 12.06.2002
(21) Numéro de dépôt: 98944011.0
(22) Date de dépôt: 16.09.1998
(51) Int. Cl.: B60T 11/26

(54) **DISPOSITIF D'ALIMENTATION DE SECURITE POUR CIRCUIT HYDRAULIQUE DOUBLE**
SICHERHEITS-DRUCKMITTELVERSORGUNGSVORRICHTUNG FÜR DOPPELTEN FLÜSSIGKEITSKREISLAUF
SECURE SUPPLY DEVICE FOR DOUBLE HYDRAULIC CIRCUIT

(30) Priorité: 02.10.1997 FR 9712289
(43) Date de publication de la demande: 19.07.2000
(73) Titulaire: Bosch Systemes de Freinage, 93700 Drancy (FR)
(72) Inventeur: COME, Philippe, F-60300 Senlis (FR); GAFFE, François, F-93110 Rosny sous Bois (FR)
(86) Numéro de dépôt international: PCT/FR1998/001992
(87) Numéro de publication internationale: WO 1999/017967

(56) Documents cités:
- DE-A1- 3 728 461
- DE-A1- 4 115 063
- DE-C- 904 499
- DE-C1- 4 206 229
- DE-C1- 19 529 830
- FR-A- 2 039 474
- JP-A- 8 216 866
- US-A- 2 241 188
- US-A- 3 914 943
- US-A- 4 441 520
- US-A- 4 566 276
- "Uniform provisions concerning the approval of passenger cars with regard to braking"

## Description

La présente invention concerne un dispositif d'alimentation en fluide hydraulique pour un circuit d'utilisation de fluide d'un véhicule à moteur, tel qu'un circuit de freinage, ce dispositif comprenant : un premier réservoir doté d'un orifice de remplissage et d'un orifice de distribution, les orifices de remplissage et de distribution étant situés dans des premier et second plans respectifs dont le second est disposé en dessous du premier ; un second réservoir présentant un orifice d'entrée; une première communication de fluide établie entre les premier et second réservoirs et comprenant l'orifice de distribution du premier réservoir, une canalisation, et l'orifice d'entrée du second réservoir ; une seconde communication de fluide établie entre le second réservoir et le circuit d'utilisation; et un détecteur de niveau, propre à détecter un défaut d'alimentation en fluide hydraulique du circuit d'utilisation.

Un dispositif d'alimentation de ce type est connu de l'art antérieur tel qu'illustré par exemple par le brevet français FR 2 039 474.

De façon générale, les dispositifs d'alimentation en fluide hydraulique pour véhicules sont surtout utilisés pour alimenter les circuits de freinage, de commande de l'embrayage, d'assistance à la direction ou de suspension, les circuits de freinage posant cependant des problèmes de sécurité spécifiques et particulièrement aigus.

Le brevet antérieur précédemment cité décrit un dispositif dans lequel le second réservoir est un réservoir de secours, permettant une réalimentation du réservoir standard pour le cas où une consommation excessive de fluide viendrait à vider le réservoir standard, et dans lequel l'adjonction d'un réservoir supplémentaire permet d'augmenter le volume de fluide de sécurité sans augmenter l'encombrement au voisinage du maître-cylindre, ce dernier constituant l'élément du circuit d'utilisation de fluide auquel ce fluide est distribué.

Cette préoccupation est cependant relativement illusoire.

En effet, non seulement le dispositif décrit dans ce brevet antérieur ne tire aucun parti, au plan de la sécurité, des avantages qu'offrent les doubles circuits, et ne pourrait a priori le faire qu'en requérant l'installation de deux canalisations entre les deux réservoirs, mais en outre l'utilisateur d'un tel dispositif, informé de l'existence de moyens supposés obvier aux conséquences immédiates de toute fuite, aura assurément tendance à en retarder la réparation et se trouvera donc, après consommation du volume de sécurité supplémentaire, dans une situation encore plus critique qu'auparavant dans la mesure où la fuite aura eu le temps de s'aggraver entre temps.

La présente invention se situe dans une perspective différente, et vise à optimiser, à la fois sur le plan de la sécurité, de l'économie, et de la facilité d'implantation sur véhicule, les dispositifs d'alimentation de fluide pour véhicules, en particulier ceux qui servent à l'alimentation des circuits de freinage ou de circuits équivalents.

A cette fin, le dispositif de l'invention est essentiellement caractérisé en ce que le premier réservoir est ouvert à l'atmosphère, et en ce que le second réservoir est isolé de l'atmosphère, et en ce que les premier et second réservoirs (2, 3) présentent des première et seconde capacités respectives, dont la seconde est au plus égale au dixième de la première.

Grâce à cette disposition, l'invention réduit considérablement le risque qu'engendre la présence de fluide hydraulique inflammable contenu dans un réservoir ouvert à l'atmosphère et placé dans une zone exposée aux chocs en cas d'accident, comme c'est le cas par exemple d'un réservoir standard de maître-cylindre, même s'il utilise l'enseignement du brevet FR - 2 039 474.

Dans un mode de réalisation avantageux de l'invention, le détecteur de niveau est installé sur le premier réservoir, et le second réservoir présente une partie inférieure et une partie supérieure, la partie inférieure étant pourvue d'une cloison qui y délimite des premier et second volumes séparés l'un de l'autre, et la partie supérieure s'étendant au-dessus de la cloison; la première communication de fluide débouche alors dans la partie supérieure du second réservoir, et la seconde communication de fluide comprend des premier et second orifices de sortie du second réservoir, s'ouvrant respectivement dans les premier et second volumes de la partie inférieure du second réservoir, et communiquant respectivement avec deux sous-circuits du circuit d'utilisation de fluide.

Grâce à cette disposition, l'invention réussit à tirer parti des avantages que présentent les circuits doubles, sans devoir recourir à l'utilisation de deux canalisations.

Conformement à l'invention, il est en outre prévue que les premier et second réservoirs présentent des première et seconde capacités respectives, dont la seconde est au plus égale au dixième de la première.

Cette disposition repose sur l'observation du fait qu'un circuit hydraulique d'actionnement de pièces mécaniques, tel qu'un circuit de freinage, présente deux modes de consommation, à savoir d'une part un mode de consommation par déplacement fonctionnel, qui correspond à la consommation que requiert chaque actionnement de ces pièces dans un état d'usure donné, et d'autre part un mode de consommation par usure, qui correspond à l'absorption par le circuit, au cours du temps, du volume de fluide qui est nécessaire pour compenser, d'un point de vue dimensionnel, l'usure progressive de ces pièces.

Comme l'absorption est un phénomène lent par rapport au délai d'intervention très bref qu'exige une fuite sur un circuit hydraulique de sécurité, seule a besoin d'être garantie l'alimentation de ce circuit qui correspond à sa consommation fonctionnelle à usure constante.

Or, la réduction de la capacité du second réservoir a le mérite de limiter de façon très importante le risque que ce réservoir, en raison de son inertie, n'éclate sous le choc d'un accident, ou qu'il se sépare du maître-cylindre.

Enfin, il est également préférable de prévoir que la canalisation faisant partie de la première communication soit constituée d'un tuyau souple, cette mesure réduisant le risque d'une rupture de la première communication dans le cas où le second réservoir subirait un déplacement par rapport au premier réservoir.

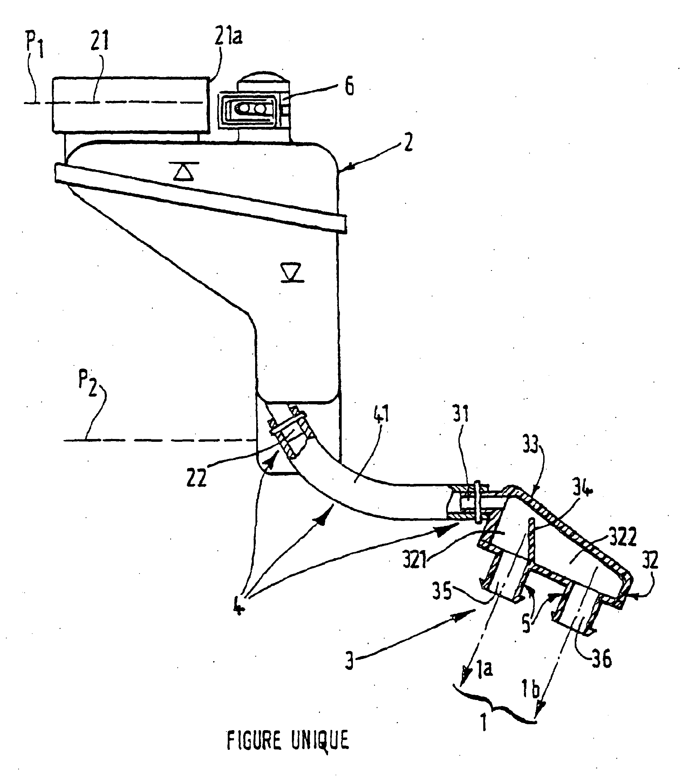

D'autres caractéristiques et avantages de l'invention ressortiront clairement de la description qui en est faite ci-après, à titre indicatif et nullement limitatif, en référence au dessin annexé dont l'unique figure est une vue partielle en coupe d'un dispositif d'alimentation conforme à l'invention.

L'invention concerne un dispositif d'alimentation en fluide hydraulique pour un circuit d'utilisation de fluide d'un véhicule à moteur, et en particulier pour un circuit de freinage 1 comprenant deux sous-circuits la et 1b.

Ce dispositif comprend essentiellement un premier réservoir 2, un second réservoir 3, une première communication de fluide 4 établie entre les premier et second réservoirs, une seconde communication de fluide 5 établie entre le second réservoir et le circuit d'utilisation 1, et un détecteur de niveau 6, propre à détecter un défaut d'alimentation en fluide hydraulique du circuit d'utilisation 1.

Le premier réservoir 2 est pourvu d'une part d'un orifice de remplissage 21 fermé par un bouchon 21a et disposé dans un plan P1, et d'autre part d'un orifice de distribution 22, disposé dans un plan P2 situé en dessous du plan P1.

Le second réservoir 3 présente un orifice d'entrée 31 et la première communication de fluide 4 comprend l'orifice de distribution 22 du premier réservoir 2, l'orifice d'entrée 31 du second réservoir 3, et une canalisation 41, montée étanche sur ces deux orifices.

Selon l'invention, le premier réservoir 2 est ouvert à l'atmosphère, par exemple au moyen d'une fuite d'air contrôlée dans le bouchon 21a, et le second réservoir 3 est isolé de l'atmosphère, c'est-à-dire étanche à l'air ambiant, de même bien sûr que la première communication 41.

Le détecteur 6 de niveau de fluide est très préférablement installé sur le premier réservoir 2, comme il l'est habituellement dans l'art antérieur lorsque ce réservoir est le seul réservoir utilisé.

Le second réservoir 3 présente une partie inférieure 32 et une partie supérieure 33, la partie inférieure 32 étant séparée en deux volumes 321, 322, indépendants l'un de l'autre, au moyen d'une cloison 34.

La première communication de fluide 4 débouche dans la partie supérieure 33 du second réservoir, cette partie supérieure étant définie comme s'étendant au-dessus de la barrière que la cloison 34 offre au fluide présent dans le réservoir 3, et par exemple au-dessus du bord supérieur de cette cloison dans le mode de réalisation illustré.

La seconde communication de fluide 5 comprend des premier et second orifices de sortie 35 et 36 du second réservoir 3, ces orifices de sortie 35 et 36 s'ouvrant respectivement dans les premier et second volumes 321 et 322 de la partie inférieure 32 du second réservoir 3, et communiquant respectivement avec les deux sous-circuits 1a et 1b du circuit 1 d'utilisation de fluide.

En pratique, l'invention développe le plus grand nombre d'avantages lorsque les premier et second réservoirs 2 et 3 présentent des capacités respectives nettement différentes, par exemple lorsque la capacité du second réservoir 3 est au plus égale au dixième de la capacité du premier réservoir 2.

Enfin, la sécurité offerte par le dispositif de l'invention peut être optimisée en réalisant sous la forme d'un tuyau souple la canalisation 41 qui fait partie de la première communication 4.

## Revendications

1. Dispositif d'alimentation en fluide hydraulique pour un circuit d'utilisation de fluide (1) d'un véhicule à moteur, tel qu'un circuit de freinage, ce dispositif comprenant : un premier réservoir (2) doté d'un orifice de remplissage (21) et d'un orifice de distribution (22), les orifices de remplissage et de distribution étant situés dans des premier et second plans respectifs (P1, P2) dont le second (P2) est disposé en dessous du premier (P1); un second réservoir (3) présentant un orifice d'entrée (31); une première communication de fluide (4) établie entre les premier (2) et second réservoirs (3) et comprenant l'orifice de distribution (22) du premier réservoir, une canalisation (41), et l'orifice d'entrée (31) du second réservoir; une seconde communication de fluide (5) établie entre le second réservoir (3) et le circuit d'utilisation (1); et un détecteur de niveau (6), propre à détecter un défaut d'alimentation en fluide hydraulique du circuit d'utilisation, **caractérisé en ce que** le premier réservoir (2) est ouvert à l'atmosphère et **en ce que** le second réservoir (3) est isolé de l'atmosphère.

2. Dispositif d'alimentation suivant la revendication 1, **caractérisé en ce que** le détecteur de niveau (6) est installé sur le premier réservoir (2), **en ce que** le second réservoir (3) présente une partie inférieure (32) et une partie supérieure (33), la partie inférieure (32) étant pourvue d'une cloison (34) qui y délimite des premier et second volumes (321, 322) séparés l'un de l'autre, et la partie supérieure (33) s'étendant au-dessus de la cloison (34), **en ce que** la première communication de fluide (4) débouche dans la partie supérieure (33) du second réservoir, et **en ce que** la seconde communication de fluide (5) comprend des premier et second orifices de sortie (35, 36) du second réservoir, s'ouvrant respectivement dans les premier et second volumes (321, 322) de la partie inférieure du second réservoir, et communiquant respectivement avec deux sous-circuits (la, 1b) du circuit d'utilisation de fluide (1).

3. Dispositif d'alimentation suivant l'une quelconque des revendications précédentes, **caractérisé en ce que** la canalisation (41) faisant partie de la première communication est constituée d'un tuyau souple.

## Claims

1. Hydraulic-fluid supply device for a fluid user circuit (1) of a motor vehicle, such as a braking circuit, this device comprising: a first reservoir (2) which has a filler orifice (21) and a delivery orifice (22), the filler and delivery orifices being situated in first and second respective planes (P1, P2), the second (P2) of which lies below the first (P1); a second reservoir (3) which has an inlet orifice (31); a first fluid communication (4) between the first (2) and the second (3) reservoirs and comprising the delivery orifice (22) of the first reservoir, a pipe (41), and the inlet orifice (31) of the second reservoir; a second fluid communication (5) between the second reservoir (3) and the user circuit (1); and a level detector (6) capable of detecting a fault in the supply of hydraulic fluid to the user circuit, **characterized in that** the first reservoir (2) is open to the atmosphere, **in that** the second reservoir (3) is isolated from the atmosphere and **in that** the first and second reservoirs (2, 3) have first and second respective capacities, the second of which is at most equal to one tenth of the first.

2. Supply device according to Claim 1, **characterized in that** the level detector (6) is installed on the first reservoir (2), **in that** the second reservoir (3) has a lower part (32) and an upper part (33), the lower part (32) being provided with a partition (34) which delimits therein first and second volumes (321, 322) separated from one another, and the upper part (33) extending above the partition (34), **in that** the first fluid communication (4) opens into the upper part (33) of the second reservoir, and **in that** the second fluid communication (5) comprises a first and a second outlet orifice (35, 36) of the second reservoir, these opening respectively into the first and second volumes (321, 322) of the lower part of the second reservoir and communicating respectively with two sub-circuits (la, 1b) of the fluid user circuit (1).

3. Supply device according to either one of the preceding claims, **characterized in that** the pipe (41) that forms part of the first communication consists of a flexible hose.

## Patentansprüche

1. Vorrichtung, um einen ein Fluid verwendenden Kreis (1) eines Kraftfahrzeugs, beispielsweise einen Bremskreis, mit Hydraulikfluid zu versorgen, wobei die Vorrichtung enthält: einen ersten Vorratsbehälter (2), der mit einer Füllöffnung (21) und einer Abgabeöffnung (22) versehen ist, wobei die Füllöffnung und die Abgabeöffnung in einer ersten Ebene (P1) bzw. einer zweiten Ebene (P2) angeordnet sind, wobei die zweite Ebene (P2) unterhalb der ersten Ebene (P1) angeordnet ist; einen zweiten Vorratsbehälter (3), der eine Eingangsöffnung (31) aufweist; eine erste Fluidverbindung (4), die zwischen dem ersten Vorratsbehälter (2) und dem zweiten Vorratsbehälter (3) ausgebildet ist und die Abgabeöffnung (22) des ersten Vorratsbehälters, eine Leitung (41) und die Eingangsöffnung (31) des zweiten Vorratsbehälters enthält; eine zweite Fluidverbindung (5), die zwischen dem zweiten Vorratsbehälter (3) und dem verwendenden Kreis (1) ausgebildet ist; sowie einen Niveausensor (6), der in der Lage ist, einen Mangel in der Versorgung des verwendenden Kreises mit Hydraulikfluid zu erkennen, **dadurch gekennzeichnet, dass** der erste Vorratsbehälter (2) zur Atmosphäre geöffnet ist, dass der zweite Vorratsbehälter (3) von der Atmosphäre isoliert ist und dass der erste und der zweite Vorratsbehälter (2, 3) eine erste bzw. eine zweite Kapazität aufweisen, wobei die zweite Kapazität höchstens gleich ein Zehntel der ersten Kapazität beträgt.

2. Versorgungsvorrichtung nach Anspruch 1, **dadurch gekennzeichnet, dass** der Niveausensor (6) am ersten Vorratsbehälter (2) angebracht ist, dass der zweite Vorratsbehälter (3) einen unteren Abschnitt (32) und einen oberen Abschnitt (33) aufweist, wobei der untere Abschnitt (32) mit einer Trennwand (34) versehen ist, die dort ein erstes und ein zweites Volumen (321, 322) abtrennt, die voneinander getrennt sind, wobei sich der obere Abschnitt (33) oberhalb der Trennwand (34) erstreckt, dass die erste Fluidverbindung (4) in den oberen Abschnitt (33) des zweiten Vorratsbehälters mündet und dass die zweite Fluidverbindung (5) eine erste und eine zweite Ausgangsöffnung (35, 36) des zweiten Vorratsbehälters enthält, die sich in dem ersten Volumen (321) bzw. dem zweiten Volumen (322) des unteren Abschnittes des zweiten Vorratsbehälters öffnen und mit zwei Nebenkreisen (1 a bzw. 1 b) des Fluid verwendenden Kreises (1) in Verbindung stehen.

3. Versorgungsvorrichtung nach einem der vorhergehenden Ansprüche, **dadurch gekennzeichnet, dass** die Leitung (41), die Teil der ersten Verbindung ist, aus einem nachgiebigen Rohr besteht.
